(19) **Europäisches Patentamt European Patent Office Office européen des brevets**

(11) **EP 3 478 931 B1**

(12) **EUROPEAN PATENT SPECIFICATION**

(45) Date of publication and mention of the grant of the patent:
**18.01.2023 Bulletin 2023/03**

(21) Application number: **16912857.6**

(22) Date of filing: **12.08.2016**

(51) International Patent Classification (IPC):
**G01V 3/28** *(2006.01)*   **E21B 47/085** *(2012.01)*
**E21B 47/00** *(2012.01)*   **E21B 47/08** *(2012.01)*
**G01V 13/00** *(2006.01)*

(52) Cooperative Patent Classification (CPC):
**E21B 47/006; E21B 47/00; E21B 47/085;
G01V 3/28; G01V 13/00**

(86) International application number:
**PCT/US2016/046857**

(87) International publication number:
**WO 2018/031044 (15.02.2018 Gazette 2018/07)**

(54) **METHOD FOR IN-SITU CALIBRATION OF ELECTROMAGNETIC CORROSION DETECTION TOOLS**

VERFAHREN ZUR IN-SITU-KALIBRIERUNG EINES WERKZEUGS ZUR DETEKTION VON ELEKTROMAGNETISCHER KORROSION

PROCÉDÉ D'ÉTALONNAGE IN SITU D'OUTILS ÉLECTROMAGNÉTIQUES DE DÉTECTION DE LA CORROSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.05.2019 Bulletin 2019/19**

(73) Proprietor: **Halliburton Energy Services, Inc. Houston, TX 77032-3219 (US)**

(72) Inventors:
• **FOUDA, Ahmed E.**
  **Houston, TX 77070 (US)**
• **DONDERICI, Burkay**
  **Houston, TX 77098 (US)**

• **SAN MARTIN, Luis Emillio**
  **Houston, TX 77007 (US)**
• **KHALAJ AMINEH, Reza**
  **Houston, TX 77059 (US)**

(74) Representative: **Bennett, Adrian Robert J. et al AA Thornton IP LLP Octagon Point 5 Cheapside London EC2V 6AA (GB)**

(56) References cited:
**WO-A1-2015/050840   WO-A1-2015/157268
WO-A1-2015/157270   US-A1- 2006 202 700
US-A1- 2009 302 852   US-A1- 2013 193 953
US-A1- 2015 301 222   US-A1- 2015 338 541**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

For oil and gas exploration and production, a network of well installations and other conduits are established by connecting sections of metal tubing together. For example, a well installation may be completed, in part, by lowering multiple sections of metal tubing (e.g., a casing string) into a borehole, and cementing the metal tubing in place. In some well installations, multiple tubing strings are employed (e.g., a concentric multi-string arrangement) to allow for different operations related to well completion, production, or enhanced oil recovery (EOR) options.

Corrosion of metal tubing is an ongoing issue. Efforts to mitigate corrosion include use of corrosion-resistant alloys, coatings, treatments, corrosion transfer, etc. Also, efforts to improve corrosion monitoring are ongoing. For downhole tubing strings, various types of corrosion monitoring tools are available. One type of corrosion detection tool uses electromagnetic (EM) fields to estimate tubing wall thickness or other corrosion indicators. As an example, an EM logging tool may collect EM log data, where the EM log data can be interpreted to correlate a level of flux leakage or EM induction with corrosion. When multiple tubing strings are employed together, correctly managing corrosion detection EM logging tool operations and data interpretation is not a trivial task.

A prior art inversion-based calibration of downhole electromagnetic tools is disclosed in US 2015/0301222, wherein an inversion based calibration method for downhole electromagnetic tools include processing an inversion of a formation model using acquired electromagnetic measurement data to obtain formation parameters and calibration parameters for at least one measurement array.

According to the present invention there is provided a method as defined in the appended independent method claim. Further preferable features of the method of the present invention are defined in the appended dependent method claims.

According to a further aspect of the present invention there is provided a system as defined in the appended independent system claim. Further preferable features of the system of the present invention are defined in the appended dependent system claims.

BRIEF DESCRIPTION OF THE DRAWINGS

Accordingly, there are disclosed in the drawings and the following description systems and methods for calibrating an electromagnetic (EM) logging tool (e.g., an EM logging tool for multi-string corrosion monitoring). In the drawings:

FIGs. 1A and 1B depict an illustrative multi-string corrosion survey environment;
FIGs. 2A and 2B show illustrative transmitter/receiver configurations for an EM logging tool for multi-string corrosion monitoring;
FIG. 3 shows an illustrative multi-string model with related attributes;
FIG. 4 depicts an illustrative logging scenario;
FIG. 5 illustrates an example of an axial arrangement of receivers of a corrosion detection tool; and
FIG. 6 is a flowchart for an illustrative method to characterize attributes of a multi-string environment;
FIG. 7 is a flowchart for an illustrative method to iteratively optimize estimation of various parameters when characterizing well tubing strings; and
FIG. 8 is a flowchart of an illustrative method for calibrating an EM logging tool in a multi-string environment.

It should be understood, however, that the specific embodiments given in the drawings and detailed description do not limit the disclosure. On the contrary, they provide the foundation for one of ordinary skill to discern the alternative forms, equivalents, and modifications that are encompassed together with one or more of the given embodiments in the scope of the appended claims.

DETAILED DESCRIPTION

Disclosed herein is an electromagnetic (EM) logging tool for multi-string corrosion monitoring and related methods. Once EM log data corresponding to different tubing strings is collected, it is processed. The processing of EM log data may be performed downhole and/or at earth's surface to derive attributes (e.g., tubing wall thickness, diameter, electrical conductivity, and/or magnetic permeability) for each of multiple tubing strings as a function of depth. The derived attributes can further be correlated with one or more types of corrosion and/or with a corrosion index. If corrosion of a particular tubing string is determined to exceed a threshold, a corrective action may be performed. Example corrective actions include enhancing, repairing, or replacing at least part of a tubing segment. Additionally or alternatively, a treatment can be applied to reduce the rate of corrosion for at least part of a tubing segment.

Particular method embodiments relate to calibrating an EM logging tool in a multi-string environment. In at least some embodiments, a calibrating method includes obtaining a plurality of measurements using a device positioned in the tubing string at a particular location. The plurality of measurements correspond to either a plurality of transmitter signal frequencies or a plurality of measurement time slots measured by at least one receiver, and a thickness and a diameter of the tubing string at the particular location are known. The method further includes determining a plurality of calibration coefficients based on the plurality of measurements, the known thickness, and the known diameter. Determining the plurality of calibration coefficients includes: assigning calibration coefficients of an equal magnitude to measurements corresponding to at least two frequencies of the plurality of transmitter signal frequencies; or assigning calibration coefficients of an equal value to measurements corresponding to at least two slots of the plurality of measurement time slots.

A related system includes a measurement device that obtains a plurality of measurements of the tubing string at a particular location. The plurality of measurements correspond to either a plurality of transmitter signal frequencies or a plurality of measurement time slots measured by at least one receiver, and a thickness and a diameter of the tubing string at the particular location are known. The system further includes a processor that determines a plurality of calibration coefficients based on the plurality of measurements, the known thickness, and the known diameter by: assigning calibration coefficients of an equal magnitude to measurements corresponding to at least two frequencies of the plurality of transmitter signal frequencies; or assigning calibration coefficients of an equal value to measurements corresponding to at least two slots of the plurality of measurement time slots.

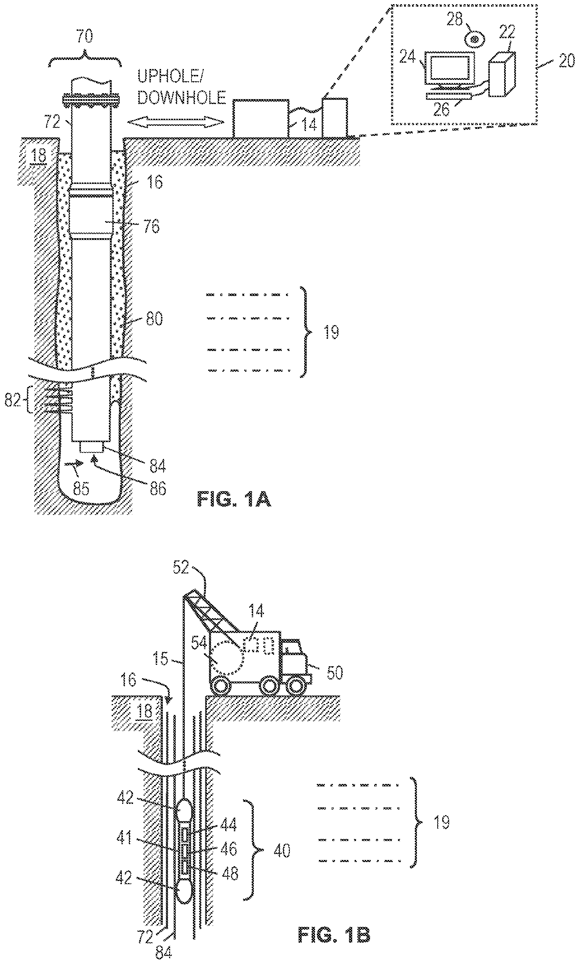

To provide some context for the disclosure, FIGs. 1A and 1B show an illustrative multi-string corrosion survey/monitoring environment. FIG. 1A shows a borehole 16 that penetrates formations 19 of the earth 18. A casing string 72 is positioned in the borehole 16 and secured in place by a cement sheath 80. Further, a production tubing string 84 has been positioned in an inner bore of the casing string 72.

The casing string 72 and production tubing 84 of well 70 are formed from multiple tubular sections (usually about 30 feet long) connected end-to-end by couplings 76. It should be noted that FIG. 1A is not to scale, and that each tubing string typically includes many such couplings 76. Both the casing string 72 and the production tubing string 84 are typically formed of metal pipe and are subject to corrosion.

The production tubing string 84 defines both central and annular flow paths for fluids. With reference to FIG. 1A, the well 70 corresponds to a production well and the production tubing string is adapted to guide a desired fluid (e.g., oil or gas) from a bottom of the borehole 16 to a surface of the earth 18. Accordingly, perforations 82 may be formed in the casing string 72 or at a bottom of the borehole 16 to facilitate the flow of a fluid 85 from a surrounding formation into the borehole 16 and thence to earth's surface via the central flow path which can be accessed via an opening 86 at the bottom of the production tubing string 84. Note that well configuration of FIG. 1A is illustrative and not limiting on the scope of the disclosure. Other examples of permanent well installations include injection wells and monitoring wells. Further, well 70 may include additional casing or tubing strings to provide additional flow paths to the surface, e.g., from multiple production zones.

FIG. 1A further illustrates a surface interface 14 and/or computer system 20 for collecting data from downhole sensors and perhaps controlling downhole actuators to optimize production. In some embodiments, the surface interface 14 and/or the computer system 20 may be supplied with EM log data collected by an EM logging tool, and tasked with processing the EM log data to determine and monitor tubing string attributes as described herein. In at least some embodiments, the computer system 20 includes a processor 22 that performs the EM log data analysis operations by executing software or instructions obtained from a local or remote non-transitory computer-readable medium 28. The processor 22 may be, for example, a general purpose microprocessor, a microcontroller, a digital signal processor, an application specific integrated circuit, a field programmable gate array, a programmable logic device, a controller, a state machine, gated logic, discrete hardware components, an artificial neural network, or any like suitable entity that can perform calculations or other manipulations of data. In some embodiments, computer hardware can further include elements such as, for example, a memory (e.g., random access memory (RAM), flash memory, read only memory (ROM), programmable read only memory (PROM), erasable read only memory (EPROM)), registers, hard disks, removable disks, CD-ROMS, DVDs, or any other like suitable storage device or medium. The computer system 20 also may include input device(s) 26 (e.g., a keyboard, mouse, touchpad, etc.) and output device(s) 24 (e.g., a monitor, printer, etc.). Such input device(s) 26 and/or output device(s) 24 provide a user interface that enables an operator to interact with an EM logging tool and/or software executed by the processor 22. For example, the computer system 20 may enable an operator to select analysis options, view collected EM log data, view analysis results, and/or perform other tasks.

The EM logging tool can take various forms, including that of the wireline tool 40 illustrated in FIG. 1B. EM logging tool 40 is positioned within production tubing string 84 and casing string 72, suspended by a cable 15 having conductors and/or optical fibers for conveying power and communication to the EM logging tool 40. The cable 15 may also be used as a communication interface for uphole and/or downhole communications. The cable 15 wraps and unwraps as needed around cable reel 54 when lowering or raising the EM logging tool 40. As shown, the cable reel 54 may be part of a movable logging facility or vehicle 50 having a cable guide 52.

The EM logging tool 40 may include stabilizers 42 on one or more ends (e.g. opposite ends) of main body 41 to centralize the tool 40 within the innermost production tubing string 84. The main body 41 of the EM logging tool 40 includes control electronics 44, transmitter(s) 46, and receiver(s) 48. In operation, transmitter(s) 46 are directed by the control electronics 44 to generate a time-varying EM field whose magnetic flux is guided and modified by the production tubing string 84 and/or tubing string 72. The magnetic flux induces a voltage in receiver(s) 48. The magnetic flux modification provided by the production tubing string 84 and/or tubing string 72 is lossy due to induced eddy currents. The control electronics 44 store the voltages recorded by receiver(s) 48 as a function of tool position to form an EM data log, which may be correlated with geometrical, electrical, and/or magnetic attributes of the production tubing string 84 and/or tubing string 72. Corrosion of the production tubing string 84 and/or tubing string 72 affects their geometrical, electrical, and/or magnetic attributes and can therefore be estimated from analysis of the EM log data. The control electronics 44 may also include a communication interface to transmit the EM data log to earth's surface. Additionally or alternatively, the EM data log obtained by the EM logging tool 40 can be stored and accessed later once the tool 40 reaches earth's surface.

In FIG. 1B, the surface interface 14 receives the EM data log via the cable 15 and conveys the EM field measurements to a computer system 20. Again, the interface 14 and/or computer system 20 *(e.g.,* part of the movable logging facility or vehicle 50) may perform various operations such as converting signals from one format to another, storing the EM log data, and/or analyzing the EM log data to determine tubing string attributes.

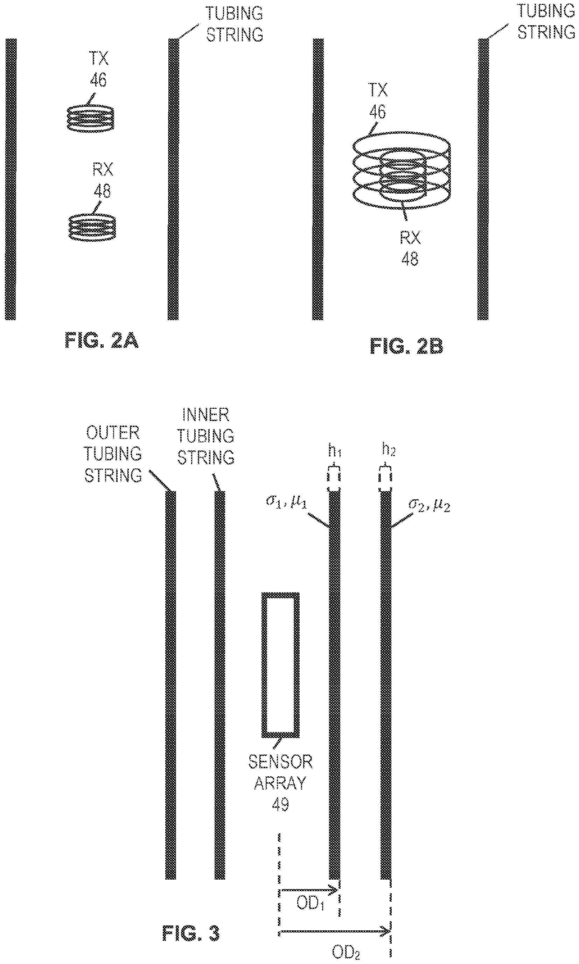

FIGs. 2A and 2B show illustrative transmitter/receiver configurations suitable for an EM logging tool (e.g., tool 40). With reference to FIG. 2A, transmitter 46 and receiver 48 are coaxially positioned within a tubing string (e.g., strings 72 and/or 84) and are separated apart along the tool axis. With reference to FIG. 2B, transmitter 46 and receiver 48 are coaxially positioned within a tubing string (e.g., strings 72 and/or 84) and are collocated. For example, transmitter 46 and receiver 48 may correspond to coils or solenoids, where the receiver 48 is positioned inside the transmitter 46, or vice versa. While only one transmitter 46 and one receiver 48 are illustrated in FIGs. 2A and 2B, it should be understood that EM logging tools such as tool 40 may have a plurality of sensor arrays, where the distance between transmitters 46 and receivers 48 for different sensor arrays may vary. For example, multiple receivers may provide measurements in response to the operation of a given transmitter; conversely, a given receiver may provide measurements in response to the operation of multiple transmitters. Further, the dimensions of the transmitters 46 and receivers 48 may vary for different sensor arrays. Where multiple transmitters are employed, their operation may be frequency multiplexed and/or time multiplexed. In some embodiments, a given transmitter may transmit a multi-frequency signal or a broadband signal. Different frequencies may be chosen to correspond to different tubing diameters. Similarly, where transmit pulses are used, different time delays may correspond to different tubing diameters.

FIG. 3 shows illustrative attributes of a multi-string model. With reference to FIG. 3, a sensor array 49 (e.g., one or more transmitter/receiver arrays) is positioned within two tubing strings (inner and outer tubing strings). The sensing array 49 may be part of an EM logging tool such as tool 40 to enable various attributes of the inner and outer tubing strings to be estimated. In the illustrative survey environment of FIGs. 1A and 1B, the tubing string 72 is an outer (casing) string, while the production tubing string 84 is an inner (production tubing) string.

One-dimensional (1D) forward and inversion models may be used to calculate multi-string tubing wall thickness/corrosion attributes. For the two-string tubing model of FIG. 3, tubing wall thickness parameters are assumed to be uniform along the axial direction. If tubing materials are known, the attributes to be determined for the inner tubing string may include outer diameter (ODi), tubing wall thickness (hi), electrical conductivity ($\sigma_1$), and/or magnetic permeability ($\mu_1$). Similarly, the attributes to be determined for the outer tubing string may include outer diameter (OD$_2$), tubing wall thickness (h$_2$), electrical conductivity ($\sigma_2$), and/or magnetic permeability ($\mu_2$).

To calculate the tubing wall thickness, a numerical optimization (e.g., a Gauss-Newton method) may be employed. In such case, unknown parameters are adjusted until the misfit error between measurement data and predicted data (computed via forward modeling using estimated parameters) is sufficiently small. This goal can be achieved by iteratively solving a non-linear problem that minimizes the objective cost function:

$$C(X) = \frac{1}{2}\left[\|e(X)\|^2\right], \qquad\qquad (1)$$

where the residual factor is defined as:

$$e(X) = \begin{bmatrix} S_1(X) - m_1 \\ S_2(X) - m_2 \\ \vdots \\ S_j(X) - m_j \\ \vdots \\ S_M(X) - m_M \end{bmatrix}, \qquad (2)$$

where $S_j(X)$ is the modeled tool response corresponding to a particular value of tubing attribute vector X. For a single tubing string scenario, X=[OD; h; $\sigma$; $\mu$]. If tubing OD and tubing material are known or predetermined, X is simply equal to tubing thickness h, $m_j$ is the corresponding measured data, and $\| \cdot \|$ refers to the L2-norm. If the EM logging tool 40 is operated as a time-domain tool, measured data $m_j$ are usually selected time bins that may correspond to different tubing string diameters. On the other hand, if the EM logging tool 40 is operated at a frequency or multiple frequencies, measured data $m_j$ are collected signals at the frequency or frequencies used. If multiple sensor arrays are employed in the EM logging tool 40, measured data $m_j$ are tool responses (frequency or time-domain) from all of the selected arrays.

The scheme described with reference to Equations (1) and (2) can be implemented straightforwardly by using classical optimization methods. However, it becomes inefficient when the optimization problem is relatively large such as when dealing with a multi-string scenario. Mathematically, as more unknowns are introduced into the inversion model, the final results become more unstable.

Observed from simulation results and theory of EM wave propagation, shorter sensor arrays with higher frequency (or with an earlier time channel) are more sensitive to an inner tubing string (e.g., production tubing string 84). On the other hand, longer sensor arrays with lower frequency (or with a later time channel) are sensitive to both inner and outer strings (e.g., both production tubing string 84 and tubing string 72). These behaviors enable calculation of inner string attributes using a simplified inversion model without taking the outer string into account. After estimating the inner string attributes, the outer string attributes can be computed afterwards in different ways.

According to at least one embodiment, an EM pipe inspection tool (e.g., an EM corrosion detection tool, an EM logging tool 40) is calibrated while the tool is run inside two or more well tubing strings (e.g., outer tubing string, inner tubing string of FIG. 3). Running corrosion detection tools in the production tubing may be performed as part of downhole corrosion detection. Early detection of corrosion in well tubing strings promotes the integrity and the safety of the well.

Different types of corrosion detection tools include mechanical calipers, ultrasonic acoustic tools, cameras, EM flux leakage, and EM induction tools. Among these tools, EM induction tools can be used to detect corrosion in outer tubings (e.g., outer tubing string of FIG. 3) beyond one or more inner tubings in which the tool is run.

An EM induction tool includes at least one transmitter (e.g., transmitting coil) and at least one receiver (e.g., receiving coil). The transmitter induces eddy currents inside the metallic pipes (e.g., well tubings, or tubing strings), and the receiver records secondary fields generated from the pipes. Those secondary fields bear information about the electrical properties and metal content of the pipes and can be inverted for any corrosion or loss in metal content of the pipes.

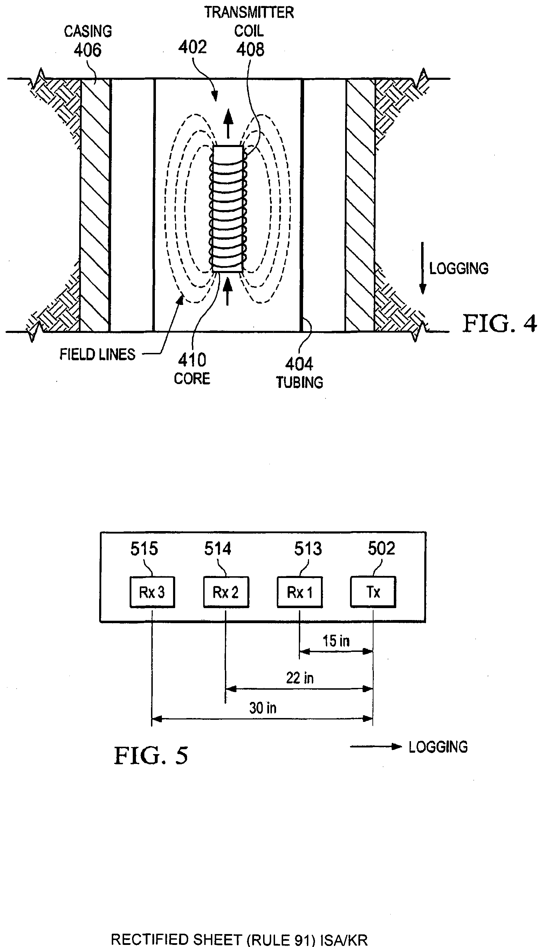

FIG. 4 depicts an illustrative logging scenario. With reference to FIG. 4, a corrosion detection tool transmitter 402 is run inside a tubing string 404 (e.g., production tubing string 84) and a tubing string 406 (e.g., casing string 72). The tool transmitter 402 includes a coil 408 that is wrapped around a core 410. Usually, cores are made of high magnetic permeability materials, the magnetic permeability of which relative to that of air can range from 70-300.

FIG. 5 illustrates an example of an axial arrangement of receivers of a corrosion detection tool. The tool includes a transmitter 502 and receivers 513, 514, 515. The receivers 513, 514, 515 are positioned at respective distances (or axial spacings) away from the transmitter 502, with respect to a direction of logging. For example, in the example of FIG. 5, the receivers 513, 514, 515 as located 15 in. (38.1 cm), 22 in. (55.9 cm), and 30 in. (76.2 cm) away from the transmitter 502, respectively.

EM induction tools can be frequency-domain tools that operate at discrete set of frequencies (e.g., higher frequencies to inspect inner pipes and lower frequencies to inspect outer pipes). Alternatively, EM induction tools can operate in the time domain by transmitting transient pulses and measuring the decay response versus time (e.g., earlier time(s) corresponds to inner pipes and later time(s) corresponds to outer pipes). Such tools are referred to as pulsed eddy current corrosion detection tools.

The way(s) in which a core (e.g., core 410) affects measurements (e.g., measurements made at a receiver) depends on various factors, e.g., environmental factors such as the number of pipes inside which the tool is run, the thicknesses of the pipes, and electromagnetic properties (electrical conductivity and magnetic permeability) of the pipes. Therefore, tool calibration is performed *in situ* while the tool is run inside the well.

For a given well, various characteristics of the pipes (e.g., the number of pipes, the outer diameters of the pipes, the nominal thickness of each pipe, and the nominal electrical conductivity) may be known *a priori*. However, the magnetic permeability of each pipe may not be known precisely. Also, the values of this parameter may vary substantially from one casing section to another. Therefore, calibration is performed to account for effects of the core, as well as to determine estimates of the effective magnetic permeability of the pipes within each casing section. The effective magnetic permeability may also account for differences in electrical conductivity between those of the pipes and those assumed in the computer model. One average effective magnetic permeability may be assumed for all pipes, or different effective permeabilities may be assumed for different pipes.

As noted earlier, EM corrosion detection tools may be of different types (frequency domain tools, time domain tools). Regardless of the type of the EM corrosion detection tool, measurements made at different receivers and different channels (e.g., frequencies in the case of frequency-domain tools, or time slots in the decay response in case of time-domain tools) are typically calibrated before the measurements are compared with simulated results as part of the processing to estimate pipe thickness.

In summary, calibration is performed for any of various reasons. For example, calibration enables using fast (or faster) synthetic models in inversion. In order to detect possible defects in the pipes using receiver voltage measurements, an inversion algorithm is applied to find the optimum thickness and the magnetic permeability of each pipe that minimize the misfit between measurements at each depth and synthetic data generated using a computer model. Radial 1-dimensional (R-1D) models are typically used because these models are much faster than two-dimensional (2-D) models. However, R-1D models cannot account for 2-D features of the tool (e.g., tool 40), such as the presence of a magnetic core inside a transmitter coil and/or a receiver coil. The effect of the presence of the core (on the corresponding magnetic field) can be compensated using calibration constants (e.g., calibration coefficients) computed from the calibration process.

As another example, calibration may be performed to account for discrepancies between the tool (e.g., tool 40) and the synthetic model used in inversion. In addition to the effect of the presence of the core, other systemic mismatches (e.g., any possible phase drifts or flips in measurements, possible drifts in current level, and discrepancy between assumed and actual values of pipe conductivity) may be compensated through calibration.

As another example, calibration may be performed to estimate an effective magnetic permeability of the pipes that can be used in further processing. Also, calibration may be performed to improve visualization of raw data. Raw data may involve arbitrary magnitude and phase shifts among different measurements, which can render it difficult for a user to visualize defects purely based on raw data. Calibration may compensate for such shifts and thereby improve visualization.

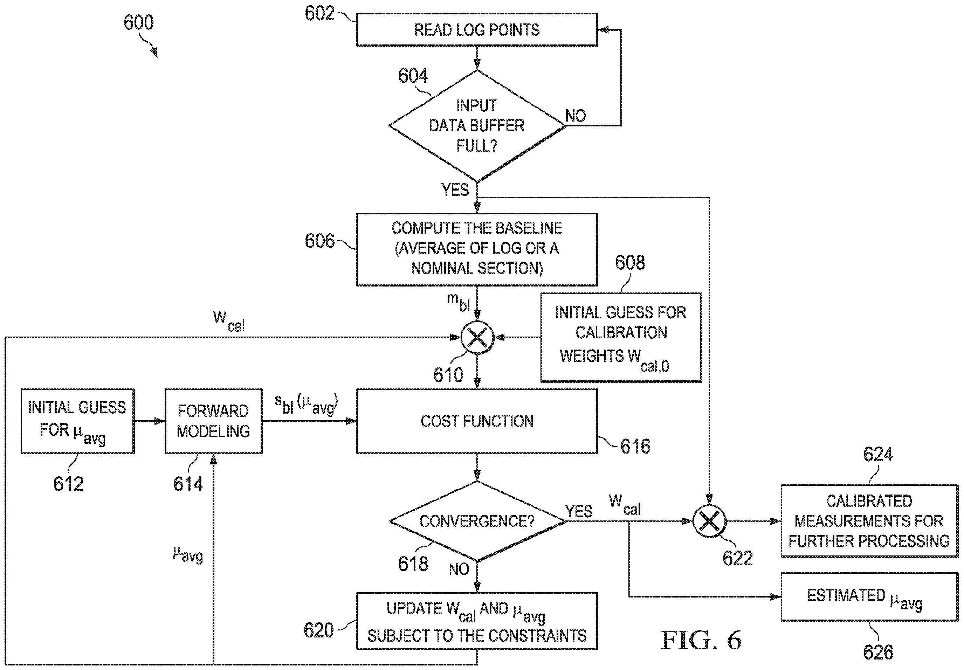

FIG. 6 illustrates an example of a flowchart 600 for calibrating an EM logging tool according to at least one embodiment. An EM logging tool (e.g., tool 40) is run inside one or more pipes (e.g., tubing 404, casing 406). Responses are measured by the tool at each of multiple channels. Each channel is defined by a corresponding receiver (e.g., receiver 513, 514 or 515) and a corresponding frequency of the discrete set of frequencies. Responses from the tool are recorded in a log (e.g., EM data log).

At block 602, one or more log points are read. The log points are input to (or stacked in) an input data buffer. The buffered log may correspond to one casing section, or casing joint. As such, the input data buffer may be sized such that a buffered log corresponds to one casing section. At block 604, it is determined whether the input data buffer is full. If it is determined that the buffer is not full, then at least one additional log point is read (see block 602).

If it is determined that the data buffer is full, then, at block 606, a baseline measurement is determined. For calibration, a baseline measurement $\mathbf{m}_{bl}$ corresponds to a location where all pipes are assumed to be of a nominal thickness. The baseline measurement may be obtained by averaging values of a sufficiently long log (e.g., a log that spans an entire casing section) to minimize the effect of any present defect, or by inspecting raw data and determining an appropriate non-defected section (e.g., a section that lacks defects). According to at least one embodiment, a different baseline measurement may be selected for each pipe joint. According to at least one other embodiment, a baseline measurement that is calculated for a particular pipe joint is used to evaluate another pipe joint.

As noted above, the baseline measurement may be obtained by averaging values of a sufficiently long log. Alternatively, the baseline measurement may be chosen as the value that occurs (or appears) most often across the log. For example, the baseline measurement may be determined by computing (or compiling) a histogram for log values and choosing the nominal value to be the value that corresponds to the peak of the histogram.

Calibration typically involves computing calibration constants (or coefficients) $\mathbf{W}_{cal}$, which are used to match the baseline measurement to a synthetic response generated by a model. Typically, such a model assumes pipes having a nominal thickness. Calibration itself may be considered as an inverse problem. For example, calibration constants $\mathbf{W}_{cal}$ and an average effective magnetic permeability for all pipes, denoted by $\mu_{avg}$, are estimated, in order to reduce (e.g., minimize) the misfit between the baseline measurement and the synthetic response.

At block 608, an initial estimate of the calibration constants is determined. The determination of this estimate may be guided with *a priori* knowledge of the magnetic permeability of the core $\mu_{core}$. According to at least one embodiment, an estimate is determined using simulation by a computer model of the transmitter and receiver coils with the cores and pipe(s). The simulation is conducted to find the voltage in the receivers due to the sensing system and the pipe(s). Another simulation is conducted to find the voltage in the receivers without the cores. A gain of the electronics (e.g., a ratio of the measured signal to voltage at the receivers) can be calculated from known specification of electrical components, or through measurements of the electrical channel via injection of a known reference voltage signal. Voltages obtained from the modeling, both with and without the core, and the electronics gain may be used to produce an initial estimate of the calibration constants based on Equation (3) below.

$$W_{cal} \text{ initial estimate} = (\text{Voltage with core} / \text{Voltage without core}) * \text{Gain} \quad (3)$$

Different initial estimates may be determined, e.g., in situations where the number of pipes and the thicknesses of the pipes are different.

At block 610, the estimated calibration constants are used to scale the baseline measurement. The estimated calibration constants are multiplied by the baseline measurement.

At block 612, an estimate of the average effective permeability $\mu_{avg}$ of the pipes is determined. According to at least one embodiment, this estimate is equal to the midpoint of the expected range of permeability values for the pipes. Typically, the relative permeability of pipes used in well casings can range from 1-120. If available, information from a magnetic permeability sensor could be used.

At block 614, the estimated $\mu_{avg}$ is input to a forward model to produce an initial synthetic baseline response $s_{bl}(\mu_{avg})$. The forward model may use other information, such as the outer diameters of the pipes, the nominal thickness of the pipes, and/or the electrical conductivity of the pipes.

At block 616, the synthetic baseline response and the scaled baseline measurement (output by block 610) is input to a cost function. The cost function determines a misfit between the synthetic and measured responses.

At block 618, it is determined whether convergence is reached, e.g., whether the determined misfit is at or below a pre-defined threshold value. If it is determined that convergence is not reached (e.g., the misfit is above the threshold value), then, at block 420, the calibration constants $\mathbf{W}_{cal}$ and the estimate of the average effective permeability $\mu_{avg}$ are updated, subject to constraints, to reduce (e.g., minimize) the misfit in the following iteration. According to at least one embodiment, the updating is performed if both the misfit is above the threshold value and the number of iterations performed has not yet reached a pre-defined maximum.

An example of a constraint on the estimation of $\mu_{avg}$ is that the estimated value is bounded between the minimum and maximum permeabilities the pipes can have, based, e.g., on prior knowledge of the properties of pipes typically used in well casings (e.g., $50 < \mu_{avg} < 90$). In this regard, the limits used may depend on the *a priori* knowledge of the type of steel from which the pipes are made. An example of a constraint on the estimation of $\mathbf{W}_{cal}$ is that

$$\frac{1}{\mu_{core}} < abs(\mathbf{W}_{cal}) < 1$$

, where $\mu_{core}$ (e.g., the permeability of the core 410) can be obtained by experimental measurement.

After the calibration constants $\mathbf{W}_{cal}$ and the estimate of the average effective permeability $\mu_{avg}$ are updated (see block 620), blocks 614, 616 and 618 are repeated until convergence is reached. According to at least one embodiment, blocks 614, 616 and 618 are not repeated if the number of iterations performed has reached a pre-defined maximum.

If the misfit is at or below the pre-defined threshold value, then, at block 622, the resulting calibration constants are used to scale the raw measurements in the input data buffer to obtain calibrated measurements. At block 624, the calibrated measurements undergo further processing (e.g., are further analyzed) to determine whether corrosion is presented. With reference to block 626, the estimated average effective permeability $\mu_{avg}$ of the pipes is a byproduct of the calibration process and can be used in subsequent processing.

An example of the cost function of block 616 will now be described in more detail. Here, it will be assumed that the EM logging tool is a frequency-domain tool. As described earlier, frequency-domain tools operate at discrete set of frequencies (e.g., higher frequencies to inspect inner pipes and lower frequencies to inspect outer pipes).

For frequency-domain tools, complex-valued calibration constants $\mathbf{W}_{cal}$ and an average relative permeability $\mu_{avg}$ for all pipes are estimated using a constrained optimization procedure, in order to reduce (e.g., minimize) the misfit between the baseline measurement $\mathbf{m}_{bl}$ and the synthetic response $\mathbf{s}_{bl}$.

According to at least one example, the cost function that is used is presented in Equation (4) below.

$$f_{FD}(\mathbf{W}_{cal}, \mu_{avg}, \sigma) = \left\| \mathbf{W}_{\mathbf{m,abs}} \times \left[ \text{abs} \left\{ \frac{\mathbf{s}_{bl}(\mu_{avg}, \sigma)}{\mathbf{W}_{cal}\mathbf{m}_{bl}} \right\} - 1 \right] \right\|_2^2 + \left\| \mathbf{W}_{\mathbf{m,angle}} \times \right.$$

$$\left. \text{angle} \left\{ \frac{\mathbf{s}_{bl}(\mu_{avg}, \sigma)}{\mathbf{W}_{cal}\mathbf{m}_{bl}} \right\} \right\|_2^2 \qquad (4)$$

The cost function is equal to the misfit computed as the L2 norm of the weighted difference between observed (measured) and predicted (synthetic) data.

In the above Equation (4), variables denote particular values, as follows:

$\mathbf{m}_{bl}$: a vector of M complex baseline measurements at different frequencies and receivers. M = $N_{Rx} \times N_f$, where $N_{Rx}$ denotes the number of receivers, and $N_f$ denotes the number of frequencies.

$\mathbf{s}_{bl}(\mu_{avg})$: a vector of $M$ forward model responses for pipes with nominal thickness and relative permeability $\mu_{avg}$.

$\mathbf{W}_{\mathbf{m,abs}}$, $\mathbf{W}_{\mathbf{m,angle}}$: measurement-magnitude and measurement-phase weight matrices. These are diagonal matrices (having dimensions of $M \times M$) that are used to assign different weights to different measurements based on the relative quality or importance of each measurement.

$\mathbf{W}_{cal}$: an $M \times M$ diagonal matrix of complex calibration constants

With continued reference to Equation (4), for an $N$-dimensional vector x, the expression $\|\mathbf{x}\|_2^2 = \sum_{i=1}^{N} |x_i|^2$.

Also, the expression $\frac{\mathbf{s}_{bl}(\mu_{avg})}{\mathbf{W}_{cal}\mathbf{m}_{bl}}$ refers to element-wise division.

In Equation (4), the number of unknowns is equal to 2M + 1. 2M unknowns originate from the calibration constants for the M complex measurements. For each complex measurement, there is one unknown corresponding to the magnitude component, and there is one unknown corresponding to the phase component. Separate from these 2M unknowns, an additional unknown is $\mu_{avg}$. Although there are 2M + 1 unknowns, the number of measurements is only 2M (M complex measurements, each having a magnitude component and a phase component). Because the number of unknowns is greater than the number of knowns, Equation (4) is said to be under-determined in that it does not have a unique solution.

According to at least one embodiment, relationships between calibration constants at low frequencies are utilized to convert the inverse problem of calibration from being an under-determined problem to an over-determined problem. The over-determined problem can be uniquely solved more readily.

For example, as will be described in more detail later, it is observed that at low frequencies (e.g., lowest frequencies in the discrete set of frequencies), the magnitudes of the calibration constants do not significantly vary with frequency. Therefore, calibration constants having equal magnitudes are assigned to at least the two lowest frequencies. This reduces the number of unknowns by the number of receivers quite possibly without significantly affecting calibration quality.

Another example of the cost function of block 616 will now be described in more detail. Here, it will be assumed that the EM logging tool is a time-domain tool. Time-domain tools operate by transmitting transient pulses and measuring the decay response versus time (e.g., earlier time slots correspond to inner pipes, and later time slots correspond to outer pipes).

For time-domain tools, real-valued calibration constants $\mathbf{W}_{cal}$ and an average relative permeability $\mu_{avg}$ for all pipes are estimated using a constrained optimization procedure, to reduce (e.g., minimize) the misfit between the baseline measurement $\mathbf{m}_{bl}$ and a synthetic response $\mathbf{s}_{bl}$.

According to at least one example, the cost function that is used is presented in Equation (5) below.

$$f_{TD}(\mathbf{W}_{cal}, \mu_{avg}) = \left\| \mathbf{W}_{\mathbf{m}} \times \left[ \frac{\mathbf{s}_{bl}(\mu_{avg})}{\mathbf{W}_{cal}\mathbf{m}_{bl}} - 1 \right] \right\|_2^2 \quad (5)$$

The cost function is equal to the misfit computed as the L2 norm of the weighted difference between observed (measured) and predicted (synthetic) data.

In the above Equation (5), variables denote particular values, as follows:

$\mathbf{m}_{bl}$: a vector of M real-valued baseline measurements at different time slots and receivers. M = $N_{Rx} \times N_{TS}$, where $N_{Rx}$ denotes the number of receivers, and $N_{TS}$ denotes the number of time slots in the decay response.

$s_{bl}(\mu_{avg})$: a vector of $M$ forward model responses for pipes with nominal thickness and relative permeability $\mu_{avg}$.

$\mathbf{W_m}$: measurement weight matrix. This is an $M \times M$ diagonal matrix that is used to assign different weights to different measurements based on the relative quality or importance of each measurement.

$\mathbf{W_{cal}}$: an $M \times M$ diagonal matrix of real-valued calibration constants.

In Equation (5), the number of unknowns is equal to M + 1. The unknowns are: M calibration constants corresponding to the M real-valued measurements, in addition to $\mu_{avg}$. Although there are M + 1 unknowns, the number of measurements is only M. Because the number of unknowns is greater than the number of knowns, Equation (5) is said to be under-determined in that it does not have a unique solution.

According to at least one embodiment, relationships between calibration constants at later time slots (corresponding to low frequencies) are utilized to convert the inverse problem of calibration from being an under-determined problem to an over-determined problem. The over-determined problem can be uniquely solved more readily.

For example, it is observed that at later time slots (e.g., the latest time slots), the magnitudes of the calibration constants do not significantly vary with time. Therefore, calibration constants of equal value are assigned to at least the two latest time slots. This reduces the number of unknowns by the number of receivers quite possibly without significantly affecting calibration quality.

An illustrative example of a calibration of a frequency-domain tool will now be described, with reference to a tool having the axial arrangement of FIG. 5. As described earlier with reference to FIG. 5, the tool has one transmitter (transmitter 502) and three receivers (receivers 513, 514, 515). The receivers are located at different axial spacings away from the transmitter 502, with respect to a direction of logging. The transmitter 502 has a core with a relative permeability of 70, a conductivity of 0.01 S/m, and an OD of 0.8 in. The receivers 513, 514, 514 do not have a core. Measurements are performed at the following frequencies: $f_1, f_2, f_3, f_4, f_5, f_6, f_7$. In the example that will be described, $f_1, f_2, f_3, f_4, f_5, f_6,$ and $f_7$ are equal to 0.1 Hz, 0.5 Hz, 1 Hz, 2 Hz, 4 Hz, 8 Hz, and 20 Hz, respectively. However, it is understood that measurements may be performed at other frequencies.

Calibration operations described earlier with reference to various embodiments are based on the assumption that measured responses are almost linear (or nearly linear) for small deviations from a nominal operating point. It is expected that defects in pipes caused by corrosion introduce, in the measured response, only small deviations from the nominal operating point. In this situation, calibrating the response at a nominal section may hold well for the rest of the log (e.g., for performing inversions at sections of the pipe that are away from the nominal section).

Returning to the illustrative example, the frequency-domain tool is run inside three concentric pipes. Parameters of the pipes are summarized in TABLE 1 below. The outermost pipe has a 2 ft defect (0.61m) with 0.1 in. (0.25 cm) reduction in pipe thickness relative to the nominal thickness. The following unit conversion applies to Table 1: (1.00 in = 2.54 cm) and (1.00 ft = 30.48 cm).

**TABLE 1**

| Pipe | 1 | 2 | 3 |
|---|---|---|---|
| OD [in.] | 4.5 | 7 | 9+5/8 |
| Thickness [in.] | 0.3 | 0.4 | 0.4 |
| Rel. Premeability | 82 | 76 | 85 |
| Defect(s) | None | None | 0.1 in.×2 ft (25%) |

The effect of the presence of core on the baseline measurements at the three receivers and at the seven frequencies is shown in TABLE 2.

## TABLE 2

| | Abs $(\dfrac{\mathbf{m}_{no\ core}}{\mathbf{m}_{core}})$ | | | | | Angle $(\dfrac{\mathbf{m}_{no\ core}}{\mathbf{m}_{core}})$ [rad.] | | |
|---|---|---|---|---|---|---|---|---|
| | Rx 15 in | Rx 22 in | Rx 30 in | | | Rx 15 in | Rx 22 in | Rx 30 in |
| 0.1 Hz | 0.0302 | 0.0271 | 0.0263 | | 0.1 Hz | -0.002 | -0.001 | -0.001 |
| 0.5 Hz | 0.0302 | 0.0272 | 0.0264 | | 0.5 Hz | -0.010 | -0.006 | -0.005 |
| 1 Hz | 0.0302 | 0.0272 | 0.0264 | | 1 Hz | -0.020 | -0.012 | -0.009 |
| 2 Hz | 0.0303 | 0.0272 | 0.0264 | | 2 Hz | -0.040 | -0.025 | -0.018 |
| 4 Hz | 0.0305 | 0.0273 | 0.0265 | | 4 Hz | -0.078 | -0.049 | -0.035 |
| 8 Hz | 0.0312 | 0.0276 | 0.0267 | | 8 Hz | -0.147 | -0.093 | -0.065 |
| 20 Hz | 0.0342 | 0.0290 | 0.0271 | | 20 Hz | -0.297 | -0.218 | -0.135 |

In TABLE 2, the effect of the presence of the core is presented as the ratio between a baseline measurement $m_{no\ core}$ without core (air core) and the actual baseline measurement $m_{core}$ in the presence of a core. With reference to the left half of TABLE 2, it is observed that the values of $(\dfrac{m_{no\ core}}{m_{core}})$ are almost independent of frequency (e.g., do not vary significantly) at frequencies $\leq 2$ Hz. This observation is utilized to reduce the number of unknowns in the cost function (see, e.g., Equation (4)) by assigning calibration constants having equal magnitudes to particular frequencies less than 2 Hz (e.g., the two lowest frequencies: 0.1 Hz and 0.5 Hz).

In accordance with the above-noted assignation, solving the cost function results in estimated calibration constants that are presented in TABLE 3 below.

## TABLE 3

| | Abs $(\mathbf{W}_{cal})$ | | | | | Angle $(\mathbf{W}_{cal})$ [rad.] | | |
|---|---|---|---|---|---|---|---|---|
| | Rx 15 in | Rx 22 in | Rx 30 in | | | Rx 15 in | Rx 22 in | Rx 30 in |
| 0.1 Hz | 0.0303 | 0.0269 | 0.0261 | | 0.1 Hz | -0.002 | -0.001 | -0.001 |
| 0.5 Hz | 0.0303 | 0.0269 | 0.0261 | | 0.5 Hz | -0.010 | -0.006 | -0.003 |
| 1 Hz | 0.0303 | 0.0269 | 0.0261 | | 1 Hz | -0.020 | -0.011 | -0.006 |
| 2 Hz | 0.0304 | 0.0269 | 0.0261 | | 2 Hz | -0.041 | -0.023 | -0.012 |
| 4 Hz | 0.0305 | 0.0270 | 0.0261 | | 4 Hz | -0.081 | -0.046 | -0.024 |
| 8 Hz | 0.0312 | 0.0270 | 0.0261 | | 8 Hz | -0.157 | -0.093 | -0.048 |
| 20 Hz | 0.0349 | 0.0276 | 0.0259 | | 20 Hz | -0.325 | -0.254 | -0.109 |

Good matches are found between $W_{cal}$ and $\dfrac{m_{no\ core}}{m_{core}}$ at all frequencies and for all receivers. For this example, the estimated average permeability is 80, which is a good match for the actual permeabilities of the pipes.

According to embodiments described earlier, calibration constants together with the average permeability values are estimated as part of a common optimization routine (see, e.g., FIG. 6). In order to solve for the unknowns (e.g., reduce the number of unknowns), one or more assumptions were made. For example, with respect to frequency-domain tools, it is assumed that the calibration constants (e.g., the magnitudes thereof) do not vary significantly at low frequencies (e.g., the two lowest frequencies).

According to at least one embodiment, additional assumptions are made, and/or additional pieces of pre-known information are used. This helps to increase accuracy and/or reduce the non-uniqueness of solving for the estimated calibration constants and the estimated average permeabilities.

For example, values of calibration constants that were previously determined (e.g., as the result of one or more previous sets of experiments, with specific average permeabilities, ODs, and thickness values for the pipes) may be used in a current test. If previously determined values of calibration constants are adopted for the current test, then only the average permeabilities are to be estimated during the calibration process. In every iteration of the optimization, the calibration constants corresponding to the average permeability values in the current step may be employed.

According to at least one example, previously determined values of calibration constants are used, unaltered, during the course of running a current test. Alternatively, the previously determined values of the calibration constants are used as initial estimates while running the current test. In more detail, the previously determined values of the calibration constants may be fine-tuned concurrent with the estimation of average permeability values.

Alternatively (or in addition), pre-known information (or information known in advance) is used. For example, values of the calibration constants can be found (or determined) at the surface when using pipes with pre-known permeabilities, ODs, and thicknesses. In at least one embodiment, estimated calibration constants for a given set of pipes in the tests are stored for future use.

Also, the variation of calibration constants versus frequency for a given set of pipes can be stored at the surface for any set of pre-known pipes (or pipes under current inspection), for use in later tests. Knowledge of such variations may help to reduce the non-uniqueness of the solution, as described earlier with reference to TABLE 2 and TABLE 3.

According to examples described earlier, it is assumed that pipe defects caused by corrosion introduce only small deviation defects from the nominal operating point. Accordingly, values of the calibration constants that are estimated for a section of the well tubing strings that lacks defects are also employed when characterizing a section of the well tubing strings that has defects. According to at least one example, an approach is presented for fine-tuning the calibration constants in order to handle sections of the well tubing strings that have defects of a large (or larger) size.

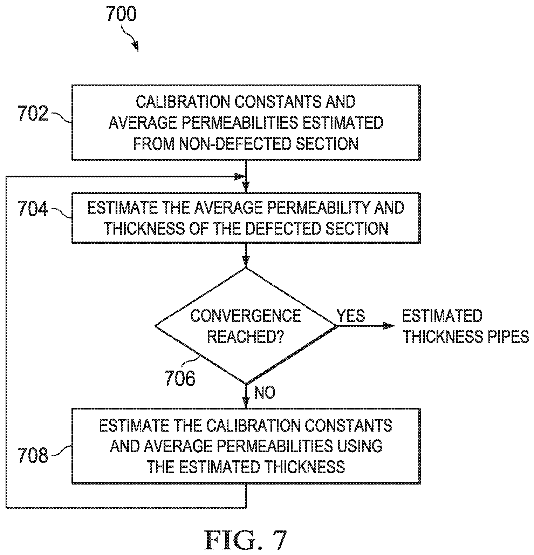

FIG. 7 is a flowchart 700 for iteratively optimizing the estimation of various parameters when characterizing well tubing strings (e.g., tubing strings that have defects of a larger size). In such cases, if the estimated parameters are not fine-tuned, then errors in the estimation of the calibration constants may lead to large (or larger) errors in the characterization results. Thus, the calibration constants are fine-tuned together with the average permeabilities and thickness values for the pipes as part of an iterative process.

At block 702 of FIG. 7, estimates of calibration constants and average permeabilities are determined or retrieved. The estimates correspond to a section of the well tubing(s) that lacks defects caused by corrosion.

At block 704, estimates of the average permeability and the thickness of a pipe at a section that does have defects are determined (e.g., based on the estimate of block 702). At block 706, it is determined whether the results converge. For example, it is determined that convergence is reached when the difference between the values from the previous and current iteration steps (for one or all of these parameters) becomes lower than a pre-determined threshold. If it is determined that the results converge, then the estimated thickness of the pipes are used. If the results do not converge, then, at box 708, estimates of the calibration constants and average permeabilities are determined (or updated) using the estimated thickness.

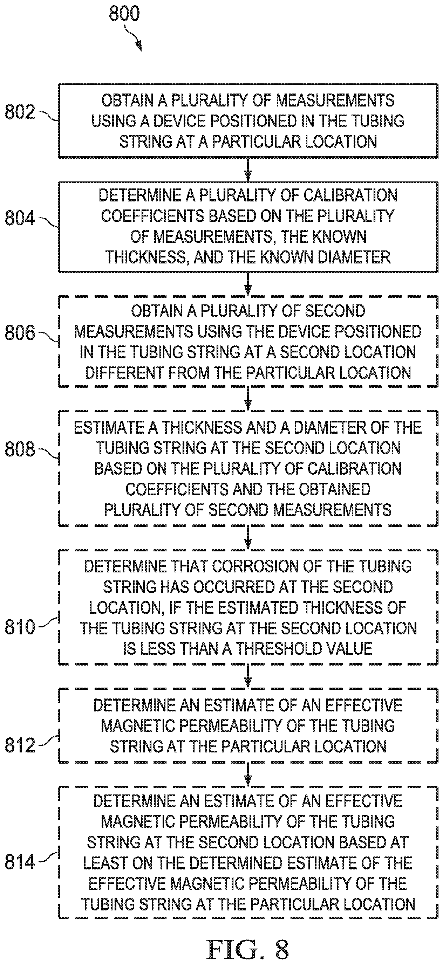

FIG. 8 shows a flowchart of an illustrative method for calibrating an EM logging tool in a multi-string environment. At block 802, a plurality of measurements are obtained using a device (e.g., tool 40) positioned in the tubing string at a particular location (e.g., a location where the tubing string does not have defects caused by corrosion). The plurality of measurements correspond to either a plurality of transmitter signal frequencies or a plurality of measurement time slots measured by at least one receiver.

At block 804, a plurality of calibration coefficients are determined based on the plurality of measurements, the known thickness, and the known diameter (see, e.g., block 616). Determining the plurality of calibration coefficient includes either assigning calibration coefficients of an equal magnitude to measurements corresponding to at least two frequencies of the plurality of transmitter signal frequencies (e.g., when the device is a frequency-domain tool), or assigning calibration coefficients of an equal value to measurements corresponding to at least two slots of the plurality of measurement time slots (e.g., when the device is a time-domain tool).

In at least one embodiment, the two frequencies are the lowest two frequencies at which measurements are obtained. In at least one embodiment, the two slots are the latest two time slots at which measurements are obtained.

At block 806, a plurality of second measurements is obtained using the device positioned in the tubing string at a second location different from the particular location (e.g., at a location having a different log depth with respect to the particular location).

At block 808, a thickness of the tubing string at the second location is determined based on the plurality of calibration coefficients (e.g., of block 804) and the obtained plurality of second measurements.

At block 810, corrosion of the tubing string is determined to have occurred at the second location, if the estimated thickness of the tubing string at the second location is less than a threshold value.

At block 812, an estimate of an effective magnetic permeability of the tubing string at the particular location is determined (see, e.g., block 702). At block 814, an estimate of an effective magnetic permeability of the tubing string at the second location is determined based at least on the determined estimate of the effective magnetic permeability of the tubing string at the particular location (see, e.g., block 704).

Examples disclosed herein include:

A: A system for determining properties of a tubing string in a subterranean formation that includes a measurement device that obtains a plurality of measurements of the tubing string at a particular location. The plurality of measurements correspond to either a plurality of transmitter signal frequencies or a plurality of measurement time slots measured by at least one receiver, and a thickness and a diameter of the tubing string at the particular location are known. The system further includes a processor that determines a plurality of calibration coefficients based on the plurality of measurements, the known thickness, and the known diameter by: assigning calibration coefficients of an equal magnitude to measurements corresponding to at least two frequencies of the plurality of transmitter signal frequencies; or assigning calibration coefficients of an equal value to measurements corresponding to at least two slots of the plurality of measurement time slots.

B: A method of determining properties of a tubing string in a subterranean formation that includes obtaining a plurality of measurements using a device positioned in the tubing string at a particular location. The plurality of measurements correspond to either a plurality of transmitter signal frequencies or a plurality of measurement time slots measured by at least one receiver, and a thickness and a diameter of the tubing string at the particular location are known. The method further includes determining a plurality of calibration coefficients based on the plurality of measurements, the known thickness, and the known diameter. Determining the plurality of calibration coefficients includes: assigning calibration coefficients of an equal magnitude to measurements corresponding to at least two frequencies of the plurality of transmitter signal frequencies; or assigning calibration coefficients of an equal value to measurements corresponding to at least two slots of the plurality of measurement time slots.

Each of the examples, A and B, may have one or more of the following additional elements in any combination. Element 1: wherein the at least two frequencies comprise two lowest frequencies of the plurality of transmitter signal frequencies. Element 2: wherein the at least two slots comprise two latest slots of the plurality of measurement time slots. Element 3: wherein: the measurement device further obtains a plurality of second measurements of the tubing string at a second location different from the particular location; and the processor further estimates a thickness and a diameter of the tubing string at the second location based on the plurality of calibration coefficients and the obtained plurality of second measurements. Element 4: wherein the processor further determines that corrosion of the tubing string has occurred at the second location, if the estimated thickness of the tubing string at the second location is less than a threshold value. Element 5: wherein the processor estimates the thickness of the tubing string at the second location by using a radial 1-dimensional (1D) model. Element 6: wherein the processor further: determines an estimate of an effective magnetic permeability of the tubing string at the particular location; and determines an estimate of an effective magnetic permeability of the tubing string at the second location based at least on the determined estimate of the effective magnetic permeability of the tubing string at the particular location. Element 7: wherein the device comprises an EM induction tool including at least one transmitter coil and at least one receiver coil. Element 8: wherein at least one of the plurality of measurements is based on either an average of two or more measurements collected over a length of a section of the tubing string, or a histogram peak of the two or more measurements. Element 9: wherein the processor assigns the calibration coefficients of an equal magnitude or the calibration coefficients of an equal value to reduce a degree of under-determination in the determination of the plurality of calibration coefficients.

Element 10: wherein the at least two frequencies comprise two lowest frequencies of the plurality of transmitter signal frequencies. Element 11: wherein the at least two slots comprise two latest slots of the plurality of measurement time slots. Element 12: further comprising: obtaining a plurality of second measurements using the device positioned in the tubing string at a second location different from the particular location; and estimating a thickness and a diameter of the tubing string at the second location based on the plurality of calibration coefficients and the obtained plurality of second measurements. Element 13: further comprising: determining that corrosion of the tubing string has occurred at the second location, if the estimated thickness of the tubing string at the second location is less than a threshold value. Element 14: wherein estimating the thickness of the tubing string at the second location comprises using a radial 1-dimensional (1D) model. Element 15: further comprising: determining an estimate of an effective magnetic permeability of the tubing string at the particular location; and determining an estimate of an effective magnetic permeability of the tubing string at the second location based at least on the determined estimate of the effective magnetic permeability of the tubing string at the particular location. Element 16: wherein the device comprises an EM induction tool including at least one transmitter coil and at least one receiver coil. Element 17: wherein at least one of the plurality of measurements is based on either an average of two or more measurements collected over a length of a section of the tubing string, or a histogram peak of the two or more measurements. Element 18: wherein the assigning of calibration coefficients of an equal magnitude or the assigning of calibration coefficients of an equal value is performed, to reduce a degree of under-determination in the determination of the plurality of calibration coefficients.

**Claims**

1.  A method of determining properties of a tubing string (84) of one or more tubing strings in a subterranean formation, comprising:

    obtaining a plurality of measurements using a device positioned in the tubing string (84) at a particular location, wherein the plurality of measurements correspond to either a plurality of transmitter signal frequencies or a plurality of measurement time slots measured by at least one receiver,
    wherein a thickness and a diameter of the tubing string (84) at the particular location are known;
    determining a plurality of calibration coefficients based on the plurality of measurements, the known thickness, and the known diameter,

    wherein determining the plurality of calibration coefficients comprises:

    assigning calibration coefficients of an equal magnitude to measurements corresponding to the two lowest frequencies of the plurality of transmitter signal frequencies; or
    assigning calibration coefficients of an equal value to measurements corresponding to the two latest slots of the plurality of measurement time slots, and

    obtaining a plurality of second measurements using the device positioned in the tubing string at a second location different from the particular location; and
    estimating a thickness and a diameter of the tubing string at the second location based on the plurality of calibration coefficients and the obtained plurality of second measurements,

    wherein the device comprises an electromagnetic (EM) induction tool transmitting transient pulses and including at least one transmitter coil and at least one receiver coil.

2.  The method of claim 1, further comprising:
    determining that corrosion of the tubing string (84) has occurred at the second location, if the estimated thickness of the tubing string at the second location is less than a threshold value.

3.  The method of any of claims 1-2, further comprising;

    determining an estimate of an effective magnetic permeability of the tubing string (84) at the particular location; and determining an estimate of an effective magnetic permeability of the tubing string (84) at the second location based at least on the determined estimate of the effective magnetic permeability of the tubing string at the particular location.

4.  The method of any of claims 1-3, wherein estimating the thickness of the tubing string at the second location comprises using a radial 1-dimensional (ID) model.

5.  The method of any of claims 1-4, wherein at least one of the plurality of measurements is based on either an average of two or more measurements collected over a length of a section of the tubing string (84), or a histogram peak of the two or more measurements.

6.  A system for determining properties of a tubing string (84) of one or more tubing strings in a subterranean formation, the system comprising:

    a measurement device that obtains a plurality of measurements of the tubing string (84) at a particular location,

    wherein the plurality of measurements correspond to either a plurality of transmitter signal frequencies or a plurality of measurement time slots measured by at least one receiver of the measurement device,
    wherein a thickness and a diameter of the tubing string at the particular location are known; and
    wherein the measurement device obtains a plurality of second measurements of the tubing string (84) at a second location different from the particular location; and
    a processor (22) that determines a plurality of calibration coefficients based on the plurality of measurements, the known thickness, and the known diameter by:

assigning calibration coefficients of an equal magnitude to measurements corresponding to at least two lowest frequencies of the plurality of transmitter signal frequencies; or

assigning calibration coefficients of an equal value to measurements corresponding to at least two latest slots of the plurality of measurement time slots, and

estimate a thickness and a diameter of the tubing string at the second location based on the plurality of calibration coefficients and the obtained plurality of second measurements

wherein the device comprises an electromagnetic (EM) induction tool transmitting transient pulses and including at least one transmitter coil and at least one receiver coil

7. The system of claim 6, wherein the processor (22) further determines that corrosion of the tubing string has occurred at the second location, if the estimated thickness of the tubing string at the second location is less than a threshold value

8. The system of claim 7, wherein the processor (22) estimates the thickness of the tubing string at the second location by using a radial 1-dimensional (ID) model.

9. The system of any of claims 6-8, wherein the processor (22) further:

   determines an estimate of an effective magnetic permeability of the tubing string (84) at the particular location; and
   determines an estimate of an effective magnetic permeability of the tubing string (84) at the second location based at least on the determined estimate of the effective magnetic permeability of the tubing string (84) at the particular location.

10. The system of any of claims 6-9, wherein at least one of the plurality of measurements is based on either an average of two or more measurements collected over a length of a section of the tubing string (84), or a histogram peak of the two or more measurements and wherein the processor (22) assigns the calibration coefficients of an equal magnitude or the calibration coefficients of an equal value to reduce a degree of under-determination in the determination of the plurality of calibration coefficients.


**Patentansprüche**

1. Verfahren zum Bestimmen von Eigenschaften eines Rohrstrangs (84) eines oder mehrerer Rohrstränge in einer unterirdischen Formation, umfassend:

   Erhalten einer Vielzahl von Messungen unter Verwendung einer Vorrichtung, die in dem Rohrstrang (84) an einer bestimmten Stelle positioniert ist,
   wobei die Vielzahl von Messungen entweder einer Vielzahl von Sendersignalfrequenzen oder einer Vielzahl von Messzeitschlitzen entsprechen, die von mindestens einem Empfänger gemessen werden,
   wobei eine Dicke und ein Durchmesser des Rohrstrangs (84) an der bestimmten Stelle bekannt sind;
   Bestimmen einer Vielzahl von Kalibrierungskoeffizienten basierend auf der Vielzahl von Messungen, der bekannten Dicke und dem bekannten Durchmesser,
   wobei das Bestimmen der Vielzahl von Kalibrierungskoeffizienten Folgendes umfasst:

   Zuweisen von Kalibrierungskoeffizienten gleicher Größe zu Messungen, die den zwei niedrigsten Frequenzen der Vielzahl von Sendersignalfrequenzen entsprechen; oder
   Zuweisen von Kalibrierungskoeffizienten eines gleichen Werts zu Messungen, die den zwei letzten Zeitschlitzen der Vielzahl von Messzeitschlitzen entsprechen, und
   Erhalten einer Vielzahl von zweiten Messungen unter Verwendung der Vorrichtung, die in dem Rohrstrang an einer zweiten Stelle positioniert ist, die sich von der bestimmten Stelle unterscheidet; und

   Schätzen einer Dicke und eines Durchmessers des Rohrstrangs an der zweiten Stelle basierend auf der Vielzahl von Kalibrierungskoeffizienten und der erhaltenen Vielzahl von zweiten Messungen,
   wobei die Vorrichtung ein elektromagnetisches (EM) Induktionswerkzeug umfasst, das transiente Impulse sendet und mindestens eine Senderspule und mindestens eine Empfängerspule enthält.

2. Verfahren nach Anspruch 1, ferner umfassend:

Bestimmen, dass eine Korrosion des Rohrstrangs (84) an der zweiten Stelle aufgetreten ist, wenn die geschätzte Dicke des Rohrstrangs an der zweiten Stelle kleiner als ein Schwellenwert ist.

3. Verfahren nach einem der Ansprüche 1 bis 2, ferner umfassend;

Bestimmen einer Schätzung einer effektiven magnetischen Permeabilität des Rohrstrangs (84) an der bestimmten Stelle;
und Bestimmen einer Schätzung einer effektiven magnetischen Permeabilität des Rohrstrangs (84) an der zweiten Stelle basierend zumindest auf der bestimmten Schätzung der effektiven magnetischen Permeabilität des Rohrstrangs an der bestimmten Stelle.

4. Verfahren nach einem der Ansprüche 1 bis 3,
wobei das Schätzen der Dicke des Rohrstrangs an der zweiten Stelle das Verwenden eines radialen 1-dimensionalen (ID) Modells umfasst.

5. Verfahren nach einem der Ansprüche 1 bis 4,
wobei mindestens eine der Vielzahl von Messungen entweder auf einem Durchschnitt von zwei oder mehr Messungen, die über eine Länge eines Abschnitts des Rohrstrangs (84) gesammelt wurden, oder auf einer Histogrammspitze der zwei oder mehr Messungen basiert.

6. System zum Bestimmen von Eigenschaften eines Rohrstrangs (84) eines oder mehrerer Rohrstränge in einer unterirdischen Formation, wobei das System Folgendes umfasst:

eine Messvorrichtung, die eine Vielzahl von Messwerten des Rohrstrangs (84) an einer bestimmten Stelle erhält, wobei die Vielzahl von Messungen entweder einer Vielzahl von Sendersignalfrequenzen oder einer Vielzahl von Messzeitschlitzen entsprechen, die von mindestens einem Empfänger der Messvorrichtung gemessen werden,
wobei eine Dicke und ein Durchmesser des Rohrstrangs an der bestimmten Stelle bekannt sind; und
wobei die Messvorrichtung eine Vielzahl von zweiten Messungen des Rohrstrangs (84) an einer zweiten Stelle erhält, die sich von dem bestimmten Ort unterscheidet; und
einen Prozessor (22), der eine Vielzahl von Kalibrierungskoeffizienten basierend auf der Vielzahl von Messungen, der bekannten Dicke und dem bekannten Durchmesser durch Folgendes bestimmt:

Zuweisen von Kalibrierungskoeffizienten gleicher Größe zu Messungen, die mindestens zwei niedrigsten Frequenzen der Vielzahl von Sendersignalfrequenzen entsprechen; oder
Zuweisen von Kalibrierungskoeffizienten eines gleichen Werts zu Messungen, die mindestens zwei letzten Zeitschlitzen der Vielzahl von Messzeitschlitzen entsprechen, und
Schätzen einer Dicke und eines Durchmessers des Rohrstrangs an der zweiten Stelle basierend auf der Vielzahl von Kalibrierungskoeffizienten und der erhaltenen Vielzahl von zweiten Messungen,

wobei die Vorrichtung ein elektromagnetisches (EM) Induktionswerkzeug umfasst, das transiente Impulse sendet und mindestens eine Senderspule und mindestens eine Empfängerspule enthält.

7. System nach Anspruch 6, wobei der Prozessor (22) ferner bestimmt, dass an der zweiten Stelle eine Korrosion des Rohrstrangs aufgetreten ist, wenn die geschätzte Dicke des Rohrstrangs an der zweiten Stelle kleiner als ein Schwellenwert ist.

8. Das System nach Anspruch 7, wobei der Prozessor (22) die Dicke des Rohrstrangs and der zweiten Stelle unter Verwendung eines radialen eindimensionalen (ID) Modells schätzt.

9. System nach einem der Ansprüche 6 bis 8, wobei der Prozessor (22) ferner:

eine Schätzung einer effektiven magnetischen Permeabilität des Rohrstrangs (84) an der bestimmten Stelle bestimmt; und
eine Schätzung einer effektiven magnetischen Permeabilität des Rohrstrangs (84) an der zweiten Stelle basierend zumindest auf der bestimmten Schätzung der effektiven magnetischen Permeabilität des Rohrstrangs (84) an der bestimmten Stelle bestimmt.

**10.** System nach einem der Ansprüche 6 bis 9, wobei mindestens eine der Vielzahl von Messungen entweder auf einem Durchschnitt von zwei oder mehr Messungen, die über eine Länge eines Abschnitts des Rohrstrangs (84) gesammelt wurden, oder auf einer Histogrammspitze der zwei oder mehr Messungen basiert, und wobei der Prozessor (22) die Kalibrierungskoeffizienten einer gleichen Größe oder die Kalibrierungskoeffizienten eines gleichen Werts zuordnet, um einen Grad an Unterbestimmung bei der Bestimmung der Vielzahl von Kalibrierungskoeffizienten zu reduzieren.

**Revendications**

**1.** Procédé de détermination de propriétés d'une colonne de production (84) d'une ou de plusieurs colonnes de production dans une formation souterraine, comprenant :

l'obtention d'une pluralité de mesures à l'aide d'un dispositif positionné dans la colonne de production (84) au niveau d'un emplacement particulier,
dans lequel la pluralité de mesures correspondent soit à une pluralité de fréquences de signal d'émetteur soit à une pluralité de tranches de temps de mesure mesurées par au moins un récepteur,
dans lequel une épaisseur et un diamètre de la colonne de production (84) au niveau de l'emplacement particulier sont connus ;
la détermination d'une pluralité de coefficients d'étalonnage sur la base de la pluralité de mesures, de l'épaisseur connue et du diamètre connu,
dans lequel la détermination de la pluralité de coefficients d'étalonnage comprend :

l'attribution de coefficients d'étalonnage d'une amplitude égale à des mesures correspondant aux deux fréquences les plus basses de la pluralité de fréquences de signal d'émetteur ; ou
l'attribution de coefficients d'étalonnage d'une valeur égale à des mesures correspondant aux deux dernières tranches de la pluralité de tranches de temps de mesure, et
l'obtention d'une pluralité de secondes mesures à l'aide du dispositif positionné dans la colonne de production au niveau d'un second emplacement différent de l'emplacement particulier ; et
l'estimation d'une épaisseur et d'un diamètre de la colonne de production au niveau du second emplacement sur la base de la pluralité de coefficients d'étalonnage et de la pluralité obtenue de secondes mesures,

dans lequel le dispositif comprend un outil à induction électromagnétique (EM) transmettant des impulsions transitoires et comportant au moins une bobine émettrice et au moins une bobine réceptrice.

**2.** Procédé selon la revendication 1, comprenant en outre :
la détermination qu'une corrosion de la colonne de production (84) s'est produite au niveau du second emplacement, si l'épaisseur estimée de la colonne de production au niveau du second emplacement est inférieure à une valeur seuil.

**3.** Procédé selon l'une quelconque des revendications 1 et 2, comprenant en outre ;

la détermination d'une estimation d'une perméabilité magnétique effective de la colonne de production (84) au niveau de l'emplacement particulier ;
et la détermination d'une estimation d'une perméabilité magnétique effective de la colonne de production (84) au niveau du second emplacement sur la base au moins de l'estimation déterminée de la perméabilité magnétique effective de la colonne de production au niveau de l'emplacement particulier.

**4.** Procédé selon l'une quelconque des revendications 1 à 3, dans lequel l'estimation de l'épaisseur de la colonne de production au niveau du second emplacement comprend l'utilisation d'un modèle radial unidimensionnel (ID).

**5.** Procédé selon l'une quelconque des revendications 1 à 4, dans lequel au moins l'une de la pluralité de mesures est basée soit sur une moyenne de deux mesures ou plus recueillies sur une longueur d'une section de la colonne de production (84), soit sur un pic d'histogramme des deux mesures ou plus.

**6.** Système de détermination de propriétés d'une colonne de production (84) d'une ou de plusieurs colonnes de production dans une formation souterraine, le système comprenant :

un dispositif de mesure qui obtient une pluralité de mesures de la colonne de production (84) au niveau d'un emplacement particulier,

dans lequel la pluralité de mesures correspondent soit à une pluralité de fréquences de signal d'émetteur soit à une pluralité de tranches de temps de mesure mesurées par au moins un récepteur du dispositif de mesure,

dans lequel une épaisseur et un diamètre de la colonne de production au niveau de l'emplacement particulier sont connus ; et

dans lequel le dispositif de mesure obtient une pluralité de secondes mesures de la colonne de production (84) au niveau d'un second emplacement différent de l'emplacement particulier ; et

un processeur (22) qui détermine une pluralité de coefficients d'étalonnage sur la base de la pluralité de mesures, de l'épaisseur connue et du diamètre connu :

en attribuant des coefficients d'étalonnage d'une amplitude égale à des mesures correspondant à au moins deux fréquences les plus basses de la pluralité de fréquences de signal d'émetteur ; ou

en attribuant des coefficients d'étalonnage d'une valeur égale à des mesures correspondant à au moins deux dernières tranches de temps de la pluralité de tranches de temps de mesure, et

en estimant une épaisseur et un diamètre de la colonne de production au niveau du second emplacement sur la base de la pluralité de coefficients d'étalonnage et de la pluralité obtenue de secondes mesures

dans lequel le dispositif comprend un outil à induction électromagnétique (EM) transmettant des impulsions transitoires et comportant au moins une bobine émettrice et au moins une bobine réceptrice

7. Système selon la revendication 6, dans lequel le processeur (22) détermine en outre qu'une corrosion de la colonne de production s'est produite au niveau du second emplacement, si l'épaisseur estimée de la colonne de production au niveau du second emplacement est inférieure à une valeur seuil.

8. Système selon la revendication 7, dans lequel le processeur (22) estime l'épaisseur de la colonne de production au niveau du second emplacement à l'aide d'un modèle radial unidimensionnel (ID).

9. Système selon l'une quelconque des revendications 6 à 8, dans lequel le processeur (22) en outre :

détermine une estimation d'une perméabilité magnétique effective de la colonne de production (84) au niveau de l'emplacement particulier ; et

détermine une estimation d'une perméabilité magnétique effective de la colonne de production (84) au niveau du second emplacement sur la base au moins de l'estimation déterminée de la perméabilité magnétique effective de la colonne de production (84) au niveau de l'emplacement particulier.

10. Système selon l'une quelconque des revendications 6 à 9, dans lequel au moins l'une de la pluralité de mesures est basée soit sur une moyenne de deux mesures ou plus recueillies sur une longueur d'une section de la colonne de production (84), soit sur un pic d'histogramme des deux mesures ou plus et dans lequel le processeur (22) attribue les coefficients d'étalonnage d'une amplitude égale ou les coefficients d'étalonnage d'une valeur égale pour réduire un degré de sous-détermination dans la détermination de la pluralité de coefficients d'étalonnage.

FIG. 1A

FIG. 1B

TUBING
STRING

TX
46

RX
48

**FIG. 2A**

TUBING
STRING

TX
46

RX
48

**FIG. 2B**

TUBING
STRING

OUTER
TUBING
STRING

INNER
TUBING
STRING

$h_1$    $h_2$

$\sigma_1, \mu_1$    $\sigma_2, \mu_2$

SENSOR
ARRAY
49

$OD_1$

**FIG. 3**

$OD_2$

CASING
406

TRANSMITTER
COIL
402    408

LOGGING

FIG. 4

FIELD LINES
410
CORE
404
TUBING

515    514    513    502

| Rx 3 | Rx 2 | Rx 1 | Tx |

15 in

22 in

30 in

FIG. 5

LOGGING

FIG. 6

700

702 — CALIBRATION CONSTANTS AND
AVERAGE PERMEABILITIES ESTIMATED
FROM NON-DEFECTED SECTION

704 — ESTIMATE THE AVERAGE PERMEABILITY AND
THICKNESS OF THE DEFECTED SECTION

CONVERGENCE
REACHED? — YES → ESTIMATED
THICKNESS PIPES

706

NO

708 — ESTIMATE THE CALIBRATION CONSTANTS
AND AVERAGE PERMEABILITIES USING
THE ESTIMATED THICKNESS

FIG. 7

800

802 — OBTAIN A PLURALITY OF MEASUREMENTS USING A DEVICE POSITIONED IN THE TUBING STRING AT A PARTICULAR LOCATION

804 — DETERMINE A PLURALITY OF CALIBRATION COEFFICIENTS BASED ON THE PLURALITY OF MEASUREMENTS, THE KNOWN THICKNESS, AND THE KNOWN DIAMETER

806 — OBTAIN A PLURALITY OF SECOND MEASUREMENTS USING THE DEVICE POSITIONED IN THE TUBING STRING AT A SECOND LOCATION DIFFERENT FROM THE PARTICULAR LOCATION

808 — ESTIMATE A THICKNESS AND A DIAMETER OF THE TUBING STRING AT THE SECOND LOCATION BASED ON THE PLURALITY OF CALIBRATION COEFFICIENTS AND THE OBTAINED PLURALITY OF SECOND MEASUREMENTS

810 — DETERMINE THAT CORROSION OF THE TUBING STRING HAS OCCURRED AT THE SECOND LOCATION, IF THE ESTIMATED THICKNESS OF THE TUBING STRING AT THE SECOND LOCATION IS LESS THAN A THRESHOLD VALUE

812 — DETERMINE AN ESTIMATE OF AN EFFECTIVE MAGNETIC PERMEABILITY OF THE TUBING STRING AT THE PARTICULAR LOCATION

814 — DETERMINE AN ESTIMATE OF AN EFFECTIVE MAGNETIC PERMEABILITY OF THE TUBING STRING AT THE SECOND LOCATION BASED AT LEAST ON THE DETERMINED ESTIMATE OF THE EFFECTIVE MAGNETIC PERMEABILITY OF THE TUBING STRING AT THE PARTICULAR LOCATION

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150301222 A